# EUROPÄISCHE PATENTANMELDUNG

(11) **EP 0 898 870 A1**
(43) Veröffentlichungstag der Anmeldung: **03.03.1999**
(21) Anmeldenummer: 98115247.3
(22) Anmeldetag: 13.08.1998
(51) Int. Cl.: A01D 34/64

(54) **Rasentraktor**

(30) Priorität: 26.08.1997 DE 19737181
(71) Anmelder: AL-KO KOBER AG, D-89359 Kötz (DE)
(72) Erfinder: Hepperle, Willi, 89198 Westerstetten (DE)
(74) Vertreter: Munk, Ludwig, Dipl.-Ing.

(57) **Zusammenfassung**

Rasentraktor (1), welcher einen Fahrersitz (4) und ein linkes Fußpedal (10) zum Zu- und Abschalten eines Mähwerks, ein rechtes Fußpedal (20) zum kombinierten Betätigen der Kupplung und der Bremse, einen linken Schalt- und Wählhebel (24) zum Schalten des Getriebes und einen rechten Verstellhebel (30) zur Verstellung der Schnitthöhe aufweist. Diese Bedienungselemente sind so angeordnet, daß der Fahrer zusammengehörende Funktionen wie "Mähwerk zuschalten" und "Schnitthöhe einstellen" überkreuz, d.h. entweder mit der rechten Hand und dem linken Fuß oder mit der linken Hand und dem rechten Fuß bedienen kann, was dem natürlichen menschlichen Koordinationsvermögen entgegenkommt und die Ergonomie des Rasentraktors (1) wesentlich erhöht.

## Beschreibung

Die Erfindung betrifft einen Rasentraktor gemäß Anspruch 1. Solche Rasentraktoren werden benutzt, um große Rasenflächen zu mähen.

Aus dem Stand der Technik sind Rasentraktoren mit Heckauswurf bekannt, bei welchen das gemähte Gras in einem Grasfangbehälter gesammelt wird, welcher am Heck des Rasentraktors angeordnet ist. Zum Entleeren des Grasfangbehälters ist dieser gegenüber dem Rasentraktor dreh- oder kippbar ausgeführt, wobei sich der Hebel zur Betätigung der Dreh- oder Kippbewegung in der Regel rechts neben dem Fahrersitz befindet. Wenn nun der Gasfangbehälter ausgekippt werden soll, ist es notwendig, gleichzeitig mit dem Drehen und Kippen des Grasfangbehälters ein kleines Stück vorwärts zu fahren, um den Grasfangbehälter komplett zu entleeren und auch wieder schließen zu können. Da aber der Fahrantriebshebel in der Regel ebenfalls rechts neben dem Fahrersitz angebracht ist, ist ein gleichzeitiges Betätigen des Fahrantriebshebels und des Hebels zur Betätigung der Dreh- und Kippbewegung mit der rechten Hand nicht möglich, da die rechte Hand des Fahrers zwischen beiden Bedienungshebeln hin und her wechseln muß.

Durch die Erfindung soll die Aufgabe gelöst werden, einen benutzerfreundlichen und ergonomisch gestalteten Rasentraktor zu schaffen. Insbesondere sollen die geometrischen Verhältnisse zwischen Sitz, Lenkrad, und den Bedienelementen in ergonomischer Hinsicht optimiert und auch die Gesamtzahl der Bedienelemente reduziert werden.

Diese Aufgabe wird gemäß der Erfindung durch die Merkmale von Anspruch 1 gelöst.

Die Erfindung wird nun im Folgenden anhand einer bevorzugten Ausführungsform unter Hinweis auf die beigefügten Zeichnungen näher beschrieben. In den Zeichnungen zeigen:

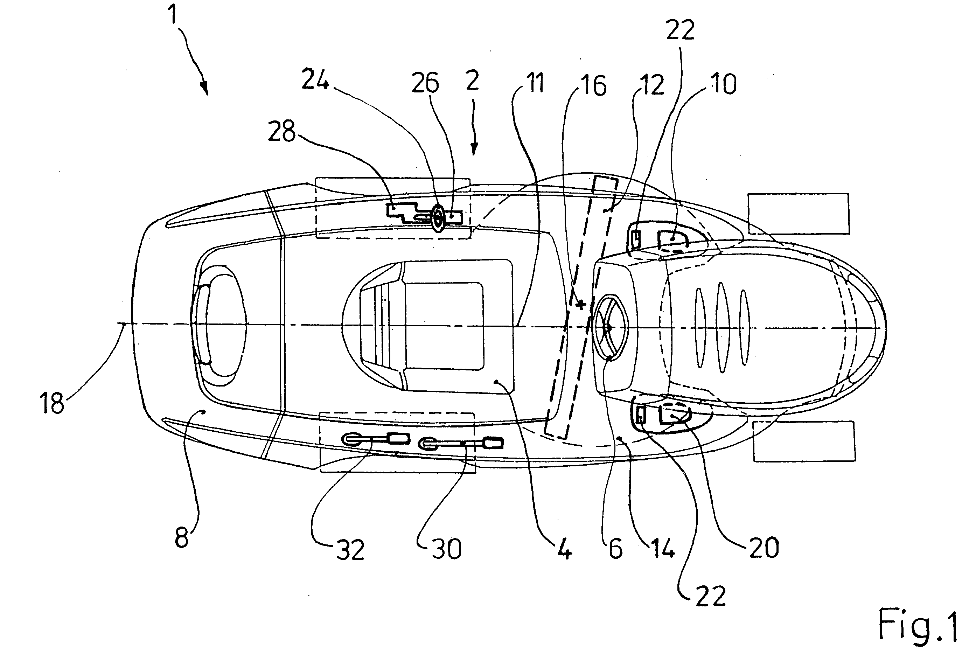

- Figur 1: eine Ansicht von oben auf die bevorzugte Ausführungsform gemäß der Erfindung;
- Figur 2: eine Seitenansicht der bevorzugten Ausführungsform gemäß der Erfindung.

Der Rasentraktor 1 hat ein Chassis 2, auf welchem ein Fahrersitz 4 und ein Lenkrad 6 angeordnet sind. In der bevorzugten Ausführungsform hat der Rasentraktor 1 einen Grasheckauswurf, wobei das gemähte Gras in einem Grasfangbehälter 8 gesammelt wird, welcher am Heck des Rasentraktors 1 angeordnet ist. Der Rasentraktor 1 weist ein linkes Fußpedal 10 zum Zu- und Abschalten eines Mähwerks auf, wobei das linke Fußpedal in Fahrtrichtung gesehen links von einer verlängerten Mittellinie 11 des Fahrersitzes 4 angeordnet und vom Fahrersitz 4 aus mit dem linken Fuß betätigbar ist. Das Mähwerk, welches in den Figuren nicht dargestellt ist, umfaßt ein Schneidmesser 12, welches an der Unterseite des Rasentraktors 1 angeordnet und innerhalb einer Schutzglocke 14 rotierend umläuft. Das Schneidmesser 12 hat einen Drehmittelpunkt 16, welcher in Fahrtrichtung gesehen gegenüber einer Längsachse 18 des Rasentraktors 1 um so weit nach links versetzt angeordnet ist, daß ein Ende des Schneidmessers seitlich über den Rasentraktorrand hinausragt. Diese Geometrie ermöglicht es, sehr nahe an Kanten entlang zu mähen.

Der Rasentraktor 1 hat außerdem ein rechtes Fußpedal 20 zum kombinierten Betätigen der Kupplung und der Bremse. Die Bremse wird dadurch aktiviert, daß das Fußpedal 20 durchgetreten wird. Damit wird analog zu Kraftfahrzeugen die Bremse mit dem rechten Fuß betätigt, wodurch in überraschenden Situationen ein instinktiv richtiges Handeln des Fahrers gewährleistet ist. Die durchgetretene Bremsposition des Fußpedals 20 ist mittels eines Fußhebels 22 arretierbar und wirkt somit als Feststellbremse. Durch nochmaliges Treten des rechten Fußpedals 20 wird die Arretierung gelöst, wobei das Loslassen des rechten Fußpedals 20 bewirkt, daß der Fahrantrieb eingekuppelt wird.

In Fahrtrichtung gesehen links von der verlängerten Mittellinie 11 des Fahrersitzes 4 ist ein Schalt- und Wählhebel 24 angeordnet, welcher vom Fahrersitz 4 aus mit der linken Hand betätigbar ist. Der Schalt- und Wählhebel 24 dient zum Betätigen des Getriebes des Rasentraktors 1, welches in der bevorzugten Ausführungsform ein automatisches hydrostatisches Getriebe und ein halbautomatisches Getriebe beinhaltet, welches ein Schalten ohne Kupplungsbetätigung ermöglicht. Beide Getriebe sind durch den einzigen Wähl-und Schalthebel 24 betätigbar, wobei dieser innerhalb einer Schaltgasse 26 für das Halbautomatikgetriebe oder in einer Schaltgasse 28 für das Automatikgetriebe schaltbar ist. Durch das Schalten des Getriebes wird im wesentlichen die Fahrgeschwindigkeit des Rasentraktors 1 eingestellt.

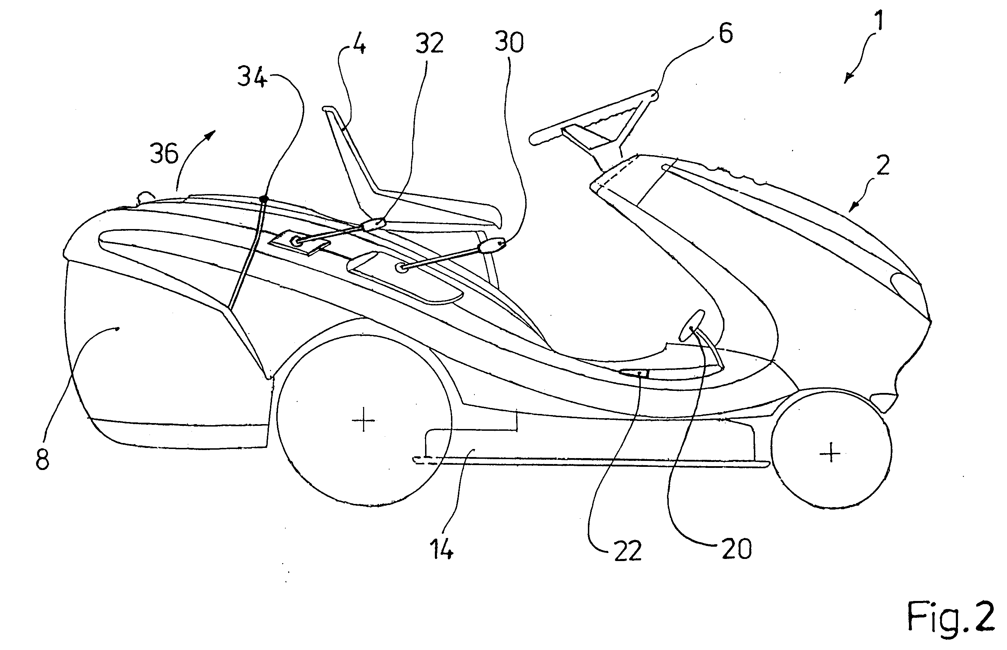

In Fahrtrichtung gesehen rechts von der verlängerten Mittellinie 11 des Fahrersitzes 4 ist ein Verstellhebel 30 für die Schnitthöhe angeordnet, welcher vom Fahrersitz 4 aus mit der rechten Hand betätigbar ist. In Fahrtrichtung gesehen hinter dem Verstellhebel 30 ist ebenfalls rechts von der verlängerten Mittellinie 11 des Fahrersitzes 4 ein Betätigungshebel 32 zum Entleeren des Grasfangbehälters 8 angeordnet. Durch Ziehen am Betätigungshebel 32 wird der Grasfangbehälter 8 um ein Drehgelenk 34 in Pfeilrichtung 36 gemäß Figur 2 geschwenkt, wodurch das geschnittene Gras aus dem Grasfangbehälter 8 nach unten herausfallen kann. Der Arbeitsfall, den Grasfangbehälter 8 zu entleeren, tritt häufig auf, weshalb die entsprechende Bedienung des Rasentraktors hierbei besonders einfach und leicht sein sollte.

Damit der Grasfangbehälter 8 komplett entleert und auch wieder in seine Ausgangsstellung zurückgekippt werden kann, ist es notwendig, während des Ausleerens ein kleines Stück nach vorne zu fahren. Dazu zieht der Fahrer mit der rechten Hand den Betätigungshebel 32 zum Kippen des Grasfangbehälters 8, wodurch der Grasfangbehälter 8 aber nur zum Teil entleert wird, da der bereits entleerte und auf dem Boden aufgehäufte Teil des Grases verhindert, daß neues Gras aus dem Grasfangbehälter 8 nachrutschen kann. Deshalb muß gleichzeitig mit der linken Hand der links vom Fahrersitz angeordnete Schalt- und Wählhebel 24 in die Stellung für die langsame Vorwärtsfahrt geschaltet werden. Während dieser langsamen Vorwärtsfahrt kann weiteres Gras aus dem Grasfangbehälter 8 herausrutschen. Da der Bedienhebel 32 für die Entleerung des Grasfangbehälters 8 rechts neben dem Fahrersitz und der Bedienhebel zur Einstellung der Fahrgeschwindigkeit (Wähl- und Schalthebel 24) links neben dem Fahrersitz liegt, kann der Fahrer beide Hebel gleichzeitig bedienen und braucht nicht umzugreifen.

Ein weiterer häufiger Arbeitsfall betrifft das Schneiden von Gras entlang von Rasenkanten. Um dies zu ermöglichen, ist, wie bereits erwähnt, das Schneidmesser 12 gegenüber der Längsachse 18 des Rasentraktors 1 asymmetrisch nach links versetzt angeordnet. Zum kantennahen Schneiden schaltet der Fahrer mit der linken Hand am Schalt- und Wählhebel 24 die gewünschte Fahrstufe und lenkt mit der rechten Hand das Lenkrad 6. Der Körper des Fahrers ist beim kantennahen Schneiden leicht nach vorne links gebeugt, um zu kontrollieren, ob der äußere Rand der Schutzglocke 14 des Schneidmessers 12 entlang der gewünschten Schnittkante verläuft. Diese nach links gebeugte Haltung wird dadurch erleichtert, daß der Schalt- und Wählhebel 24 ebenfalls auf der linken Seite liegt, denn der Fahrer muß zugleich mit der linken Hand über den Schalt- und Wählhebel 24 die Fahrgeschwindigkeit an den jeweiligen Kantenverlauf anpassen. Zudem muß die rechte Hand freibleiben, um den Rasentraktor 1 mit dem Lenkrad 6 entlang der Schnittkante zu steuern. Durch die Kombination von nach links versetztem Schneidmesser 12 und der Anordnung des Schalt- und Wählhebels 24 auf der linken Seite ergibt sich daher eine optimale Arbeitshaltung.

Eine weitere Bedienungserleichterung und Verbesserung der Ergonomie von Rasentraktoren ergibt sich gemäß der Erfindung aus der Überkreuzanordnung der Bedienungselemente, welche im Betrieb zusammen betätigt und deren Funktionen untereinander koordiniert werden müssen. Indem das rechte Pedal 20 für Kupplung und Bremse mit dem rechten Fuß und der Schalt- und Wählhebel 24 für die Geschwindigkeitswahl mit der linken Hand betätigt wird, ergibt sich beim Fahren eine ideale und natürliche Überkreuzbewegung, wie sie dem Menschen z.B. beim Gehen zu eigen ist. Denn beim Gehen sind die Bewegungen des rechten Beines und des linken Armes koordiniert, da sich beide Körperteile gleichzeitig nach vorne oder nach hinten bewegen. Dasselbe gilt natürlich auch für das linke Bein und den rechten Arm. Da dem Menschen eine Koordination der Bewegungen von rechtem Fuß und linker Hand leicht fällt und das Kupplung-/Bremspedal 20 mit dem rechten Fuß und der Wähl- und Schalthebel 24 mit der linken Hand betätigt wird, können diese beiden Funktionen für den Fahrbetrieb (Bremsen und Einstellen der Geschwindigkeit) vom Fahrer abwechseln oder gleichzeitig leicht bedient werden.

Die vom Bewegungsablauf her natürliche Überkreuzbedienung gemäß der Erfindung findet ebenfalls dann Anwendung, wenn Gras gemäht und zugleich die Schnitthöhe eingestellt werden soll. Dazu betätigt der Fahrer mit dem linken Fuß das linke Pedal 10, um das Mähwerk zuzuschalten. Gleichzeitig kann er mit der rechten Hand über den Verstellhebel 30 die Schnitthöhe einstellen. Dies ist z.B. dann notwendig, wenn sich die Beschaffenheit des Untergrunds ändert und beim Überfahren von kleinen Grashügeln die Schnitthöhe kurzzeitig höher eingestellt werden muß. Das linke Pedal 10 zum Zu- und Abschalten des Mähwerks ist ebenfalls mit einer Fußarretierung in seiner jeweiligen Endstellung arretierbar.

Durch die erfindungsgemäße Überkreuzbedienung der Funktionen "Gras schneiden" (linker Fuß) und "Einstellen der Schnitthöhe" (rechte Hand) einerseits und der Funktionen "Schalten bzw. Geschwindigkeit wählen" (linke Hand) und "Kuppeln - und Bremsen" (rechter Fuß) andererseits ergibt sich eine leichte, weil überkreuzweise Koordination von zusammengehörenden Funktionen, was zu einer Reduzierung von Bedienungsfehlern und zu einem gleichmäßigeren und entspannteren Arbeiten führt.

## Patentansprüche

1. Rasentraktor (1) welcher folgendes beinhaltet:
einen Fahrersitz (4), und
ein linkes Fuß-Betätigungsorgan (10) zum Zu- und Abschalten eines Mähwerks, wobei das linke Fuß-Betätigungsorgan (10) in Fahrtrichtung gesehen links von einer verlängerten Mittellinie (11) des Fahrersitzes (4) angeordnet und von diesem aus mit dem linken Fuß betätigbar ist; und
ein rechtes Fuß-Betätigungsorgan (20) zum kombinierten Betätigen der Kupplung und der Bremse des Rasentraktors (1), wobei das rechte Fuß-Betätigungsorgan (20) in Fahrtrichtung gesehen rechts von der verlängerten Mittellinie (11) des Fahrersitzes (4) angeordnet und von diesem aus mit dem rechten Fuß betätigbar ist; und
ein linkes Hand-Betätigungsorgan (24) zum Schalten des Getriebes des Rasentraktors (1), wobei das linke Hand-Betätigungsorgan (24) in Fahrtrichtung gesehen links von der verlängerten Mittellinie (11) des Fahrersitzes (4) angeordnet und von diesem aus mit der linken Hand betätigbar ist; und
ein erstes rechtes Hand-Betätigungsorgan (30) zur Verstellung der Schnitthöhe, wobei das erste rechte Hand-Betätigungsorgan (30) in Fahrtrichtung gesehen rechts von der verlängerten Mittellinie (11) des Fahrersitzes (4) angeordnet und von diesem aus mit der rechten Hand betätigbar ist.

2. Rasentraktor nach Anspruch 1, **dadurch gekennzeichnet, daß** ein zweites rechtes Hand-Betätigungsorgan (32) zum Kippen und Entleeren eines Grasfangbehälters (8) vorgesehen ist, welches in Fahrtrichtung gesehen rechts von der verlängerten Mittellinie (11) des Fahrersitzes (4) angeordnet und von diesem aus mit der rechten Hand betätigbar ist.

3. Rasentraktor nach Anspruch 2, **dadurch gekennzeichnet, daß** das zweite rechte Hand-Betätigungsorgan (32) in Fahrtrichtung gesehen hinter dem ersten rechten Hand-Betätigungsorgan (30) angeordnet ist.

4. Rasentraktor nach einem der Ansprüche 2 oder 3, **dadurch gekennzeichnet, daß** das Heck des Rasentraktors (1) einen Grasfangbehälter (8) aufweist, welcher gegenüber diesem dreh- oder kippbar angeordnet ist, wobei bei Betätigung des zweiten rechten Hand-Betätigungsorgans (32) der Grasfangbehälter (8) nach oben schwenkt und dabei das geschnittene Gras aus dem Grasfangbehälter (8) heraus nach unten fällt.

5. Rasentraktor nach einem der vorhergehenden Ansprüche, **dadurch gekennzeichnet, daß** die Fuß-Betätigungsorgane Pedale (10,20) und die Hand-Betätigungsorgane Hand- oder Schalthebel (24, 30, 32) beinhalten.

6. Rasentraktor nach Anspruch 5, **dadurch gekennzeichnet, daß** im Bereich mindestens eines der Pedale (10,20) fußbetätigbare Arretiermittel (22) vorgesehen sind, durch welche das Pedal (10,20) in seiner jeweiligen Endstellung arretierbar ist.

7. Rasentraktor nach einem der vorhergehenden Ansprüche, **dadurch gekennzeichnet, daß** das Mähwerk ein in einer horizontalen Ebene rotierendes Schneidmesser (12) aufweist, welches an einer Unterseite des Rasentraktors (1) angeordnet ist.

8. Rasentraktor nach Anspruch 7, **dadurch gekennzeichnet, daß** der Drehmittelpunkt (16) des Schneidmessers (12) in Fahrtrichtung gesehen gegenüber der Rasentraktor-Längsachse (18) um so weit nach links versetzt angeordnet ist, daß ein Ende des Schneidmessers (12) seitlich über den Rasentraktorrand hinausragt, um ein kantennahes Schneiden zu ermöglichen.

9. Rasentraktor nach einem der Ansprüche 1 bis 6, **dadurch gekennzeichnet, daß** das Mähwerk mehrere in einer horizontalen Ebene rotierende Schneidmesser aufweist, welche an einer Unterseite des Rasentraktors angeordnet sind.

10. Rasentraktor nach einem der vorhergehenden Ansprüche, **dadurch gekennzeichnet, daß** das Getriebe ein automatisches Getriebe oder wahlweise ein halbautomatisches Getriebe beinhaltet, welches ein Schalten ohne Betätigung der Kupplung ermöglicht, wobei beide Getriebe durch einen einzigen Wähl- und Schalthebel (24) schaltbar sind.
